(19) Europäisches Patentamt
European Patent Office
Office européen des brevets

(11) **EP 4 016 477 A1**

(12) **EUROPEAN PATENT APPLICATION**

(43) Date of publication:
**22.06.2022 Bulletin 2022/25**

(21) Application number: **21213455.5**

(22) Date of filing: **09.12.2021**

(51) International Patent Classification (IPC):
**G06V 30/19** (2022.01)   **G06V 10/82** (2022.01)
**G06V 30/12** (2022.01)

(52) Cooperative Patent Classification (CPC):
**G06V 10/82; G06V 30/133; G06V 30/19093**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.12.2020 CN 202011511494**

(71) Applicant: **BEIJING BAIDU NETCOM SCIENCE TECHNOLOGY CO., LTD.**
**No. 10 Shangdi 10th Street**
**Haidian District**
**Beijing 100085 (CN)**

(72) Inventors:
• **Xie, Qunyi**
  **Beijing, 100085 (CN)**
• **Xu, Yangliu**
  **Beijing, 100085 (CN)**
• **Qin, Xiameng**
  **Beijing, 100085 (CN)**
• **Zhang, Chengquan**
  **Beijing, 100085 (CN)**

(74) Representative: **advotec.**
**Patent- und Rechtsanwaltspartnerschaft**
**Tappe mbB**
**Widenmayerstraße 4**
**80538 München (DE)**

(54) **METHOD AND APPARATUS FOR CHARACTER RECOGNITION, ELECTRONIC DEVICE, AND STORAGE MEDIUM**

(57)     The disclosure discloses a method and an apparatus for character recognition, an electronic device, and a storage medium. The technical solution includes: obtaining a test sample image and a test sample character both corresponding to a test task; performing fine-tuning on a trained meta-learning model based on the test sample image and the test sample character to obtain a test task model; obtaining a test image corresponding to the test task; and generating a test character corresponding to the test image by inputting the test image into the test task model. The degree of the dependence of the test task model involved in the character recognition process on the scale of training samples is reduced, the over-fitting phenomenon caused by the small number of training samples is avoided, the accuracy of the character recognition result is ensured, and the reliability and efficiency in the character recognition process are improved.

FIG. 2

## Description

## FIELD

Embodiments of the disclosure relate to a field of image processing technologies, and more relate to a field of artificial intelligence technologies, and more particularly relate to computer vision and deep learning technologies.

## BACKGROUND

In recent years, with a rise of related technologies in a field of OCR (optical character recognition), character recognition gradually becomes one of important research directions. Common application scenes for the character recognition of documents include recognition for general paper documents, recognition for financial reimbursement invoices, and any other common OCR scenes. In a process of character recognition, a large amount of data is generally relied on as a basis of the character recognition.

However, due to an extremely small scale of data, an existing method for character recognition will produce an overfitting phenomenon, causing an extremely low accuracy of a result of the character recognition. Therefore, how to improve the accuracy of the result of the character recognition becomes one of the important research directions.

## SUMMARY

The disclosure provides a method and an apparatus for character recognition, an electronic device, and a storage medium.

According to a first aspect, a method for character recognition is provided. The method includes: obtaining a test sample image and a test sample character both corresponding to a test task; performing fine-tuning on a trained meta-learning model based on the test sample image and the test sample character to obtain a test task model; obtaining a test image corresponding to the test task; and generating a test character corresponding to the test image by inputting the test image into the test task model.

According to a second aspect, an apparatus for character recognition is provided. The apparatus includes: a first obtaining module, a fine-tuning module, a second obtaining module, and a generating module. The first obtaining module is configured to obtain a test sample image and a sample character both corresponding to a test task. The fine-tuning module is configured to perform fine-tuning on a trained meta-learning model based on the test sample image and the test sample character to obtain a test task model. The second obtaining module is configured to obtain a test image corresponding to the test task. The generating module is configured to generate a test character corresponding to the test image by inputting the test image into the test task model.

According to a third aspect, an electronic device is provided. The electronic device includes at least one processor and a memory. The memory is communicatively coupled to the at least one processor. The memory is configured to store instructions executable by the at least one processor. The at least one processor is caused to execute the method for character recognition according to the first aspect of the disclosure when the instructions are executed by the at least one processor.

According to a fourth aspect of the disclosure, a non-transitory computer readable storage medium having computer instructions stored thereon is provided. The computer instructions are configured to cause a computer to execute the method for character recognition according to the first aspect of the disclosure.

According to a fifth aspect of the disclosure, a computer program product is provided. The computer program is configured to implement the method for character recognition according to the first aspect of the disclosure when executed by a processor.

It should be understood that, content described in the Summary is not intended to identify key or important features of embodiments of the disclosure, but not used to limit the scope of the disclosure. Other features of the disclosure will become apparent from the following description.

## BRIEF DESCRIPTION OF THE DRAWINGS

The accompanying drawings are used for better understanding the solution and do not constitute a limitation of the disclosure.

FIG. 1 is a schematic diagram illustrating an update mode of fine-tuning.

FIG. 2 is a flow chart of a method for character recognition according to a first embodiment of the disclosure.

FIG. 3 is a schematic diagram illustrating samples of test tasks of different vertical-categories according to embodiments of the disclosure.

FIG. 4 is a schematic diagram illustrating a way for constructing data sets according to embodiments of the disclosure.

FIG. 5 is a schematic diagram illustrating a recognizing process of a CRNN according to embodiments of the disclosure.

FIG. 6 is a schematic diagram illustrating a process of calculating a CTC loss function according to embodiments of the disclosure.

FIG. 7 is a flow chart of a method for character recognition according to a second embodiment of the disclosure.

FIG. 8 is a flow chart of a method for character recognition according to a third embodiment of the disclosure.

FIG. 9 is a flow chart of a method for character recognition according to a fourth embodiment of the disclosure.

FIG. 10 is a schematic diagram illustrating a meta-training procedure according to embodiments of the disclosure.

FIG. 11 is a schematic diagram illustrating an updating procedure according to embodiments of the disclosure.

FIG. 12 is a schematic diagram illustrating a meta-testing procedure according to embodiments of the disclosure.

FIG. 13 is a schematic diagram illustrating a test result according to an embodiment of the disclosure.

FIG. 14 is a schematic diagram illustrating a whole procedure of meta-learning according to embodiments of the disclosure.

FIG. 15 is a block diagram illustrating an apparatus capable of implementing a method for character recognition according to embodiments of the disclosure.

FIG. 16 is a block diagram illustrating an apparatus capable of implementing a method for character recognition according to embodiments of the disclosure.

FIG. 17 is a block diagram illustrating an electronic device capable of implementing a method for character recognition according to embodiments of the disclosure.

## DETAILED DESCRIPTION

Description will be made below to exemplary embodiments of the disclosure with reference to accompanying drawings, which includes various details of embodiments of the disclosure to facilitate understanding and should be regarded as merely examples. Therefore, it should be recognized by the skilled in the art that various changes and modifications may be made to the embodiments described herein without departing from the scope and spirit of the disclosure. Meanwhile, for clarity and conciseness, descriptions for well-known functions and structures are omitted in the following description.

Brief description will be made below to technical fields related in the technical solution of the disclosure.

Image processing refers to a technology of analyzing an image with a computer to achieve a desired result, which is also known as picture processing. The image processing generally refers to digital image processing. A digital image refers to a large two-dimensional array captured by a device such as an industrial camera, a video camera, or a scanner. An element of the two-dimensional array is called as a pixel. A value of the pixel is called as a gray value. Image processing technology generally includes three parts of image compression, image enhancement and restoration, and image matching, description and recognition.

AI (artificial intelligence) is a subject that studies computers to simulate certain thought processes and intelligent behaviors (such as learning, reasoning, thought, and planning) of humans. The AI relates to both hardware and software technologies. The hardware technologies of the artificial intelligence generally includes some aspects such as computer vision technologies, speech recognition technologies, natural language processing technologies and learning/deep learning, big data processing technologies, and knowledge map technologies.

DL (deep learning) is to learn an inherent law and a representation hierarchy of sample data. Information obtained during the deep learning process is helpful to interpretation of data such as characters, images and sounds. An ultimate goal of the deep learning is to enable machines to have an ability to analyze and learn like human beings, and to recognize data such as characters, images and sounds. The deep learning is a complex machine learning algorithm, and has achieved far more results in speech and image recognition than previously related technologies.

Computer vision is a science that studies how to enable machines to "see", and further refer to perform machine vision, such as recognition, tracking and measurement, on targets by cameras and computers instead of human eyes, and further perform graphic processing, to enable the targets through computer processing to become images more suitable for human eyes to observe or transmission to instruments for detection. The computer vision, as a scientific subject, studies related theories and technologies, and tries to establish an artificial intelligence system that may obtain "information" from images or multidimensional data. The information here may refer to information defined by Shannon and configured to help make a "decision". Because perception may be regarded as extracting information from a sensory signal, the computer vision may also be regarded as a science for studying how to enable the artificial intelligence system to "perceive" from the images or the multidimensional data.

It should be noted that, in the related art, a method for fine-tuning on unknown data sets is generally employed to improve accuracy of model recognition.

For a low-frequency vertical-category scene, it is a great challenge for model recognition in a case of having a small amount of data. The challenge is mainly manifested in a poor generalization ability of a model. Therefore, a new model is obtained in the low-frequency vertical-category scene generally by employing the method for fine-tuning to improve a generalization ability of the new model. The vertical-category in the disclosure may refer to as a vertical field, which is concentrated in a certain specific field or a specific requirement, providing all in-depth information and related services related to this field or requirements.

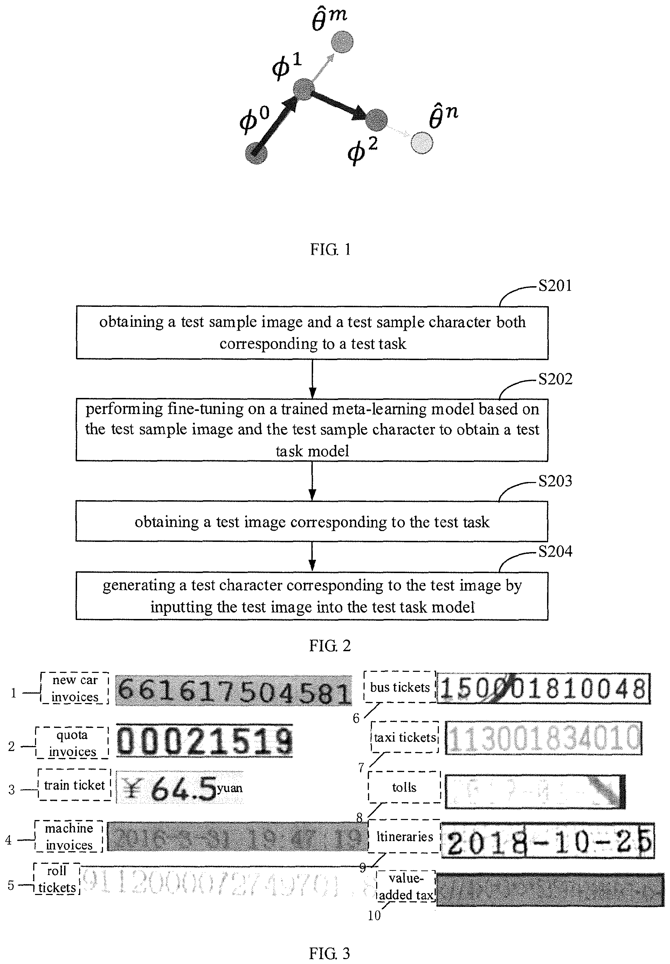

An update mode of the fine-tuning is illustrated in FIG. 1, and may be represented as:

$$\phi \leftarrow \phi_0 - \epsilon * \nabla_\phi\left(\phi, D_k\right)$$

.

where φ denotes model parameters, $\phi_0$ denotes initial model parameters, ∈ denotes an update weight of the model parameters, $D_k$ denotes a support set k, $\nabla_\phi(\phi, D_k)$ denotes a gradient of the support set k on the model parameters.

The fine-tuning simply performs well on a large number of data samples. Under a case of a small number of data samples, the fine-tuning has a limited ability for improving, also requires manual adjustment for parameters, and manually selects a generation with a smallest loss as a final output model. In this way, when the model is applied to other scene tasks, precision of the model subjected to the fine-tuning may decrease. Therefore, a usual practice for the fine-tuning is to retrain the model in a new vertical scene by the fine-tuning. When the fine-tuning is applied to multiple tasks, it is generally to obtain an optimal solution of each task, and takes an updated model parameter finally obtained as the optimal solution which may be represented as:

$$\phi \leftarrow \phi_0 - \sum_{i=1}^{n} \epsilon * \nabla_\phi(\phi, D_i)$$
.

where φ denotes model parameters, $\phi_0$ denotes initial model parameters, n denotes the number of the tasks, ∈ denotes an update weight of the model parameters, $D_k$ denotes a support set k, $\nabla_\phi(\phi, D_k)$ denotes a gradient of the support set k on the model parameters.

However, the above mode for fine-tuning has some problems, such as large limitation for application scenes, low accuracy for recognition and low efficiency for model training.

Therefore, a method for character recognition is provided in the disclosure and employs a method for character recognition based on meta-learning, which may obtain high recognition accuracy and improve generalization ability under training with the small number of samples.

Description will be made below to a method and an apparatus for character recognition, an electronic device, and a storage medium according to embodiments of the disclosure with reference to accompanying drawings.

FIG. 2 is a flow chart of a method for character recognition according to a first embodiment of the disclosure. It should be noted that, an executive subject of the method for character recognition in embodiments of the disclosure is an apparatus for character recognition. The apparatus may specifically be a hardware device or software in the hardware device. The hardware device may be such as a terminal device, or a server. As illustrated in FIG. 2, the method for character recognition provided in embodiments includes the following blocks.

At block S201, a test sample image and a test sample character both corresponding to a test task are obtained.

The test task may be any task that attempts to recognize a character.

It should be noted that, in the disclosure, the test task may be obtained in various ways in a case of trying to perform the character recognition. In some embodiments, one test task may be selected from data sets. The data sets refer to multi-task data sets constructed according to a certain rule and based on test tasks. Different data sets may include test tasks with different vertical-categories.

For example, as illustrated in FIG. 3, the data sets include 10 test tasks from 1 to 10 with different vertical-categories. In this case, any one of 1 to 10 test tasks may be obtained for character recognition.

It should be noted that, in the disclosure, the test sample image and the test sample character corresponding to the test task may constitute a query set of the data sets.

In embodiments of the disclosure, after the test task is obtained, the test sample image and the test sample character corresponding to the test task may be obtained.

It should be noted that, a way for obtaining the test sample image and the test sample character will not be limited in the disclosure, which may be selected based on an actual situation. For example, the sample image may be obtained based on the test task. Further, transformation such as gray scale, blurring, perspective, and stretching is performed on the sample image to obtain a character image, that is, the test sample image. A corresponding test sample character may be obtained based on OCR processing.

At block S202, fine-tuning is performed on a trained meta-learning model based on the test sample image and the test sample character to obtain a test task model.

In embodiments of the disclosure, the trained meta-learning model may be fine-tuned based on the test set, that is, the test sample image and the test sample character, to obtain the test task model.

It should be noted that the trained meta-learning model is not limited in the disclosure, and fine-tuning may be performed on the trained meta-learning model with any structure based on the test sample image and the test sample character to obtain the test task model.

At block S203, a test image corresponding to the test task is obtained.

In embodiments of the disclosure, after the fine-tuned test task model is obtained, the test image corresponding to the test task may be obtained, that is, the test task model may be predicted on the test set.

At block S204, a test character corresponding to the test image is generated by inputting the test image into the test task model.

In embodiments of the disclosure, after the fine-tuned test task model is obtained, the test image may be input into the test task model. In other words, the test character corresponding to the test image may be generated by predicting based on the test image corresponding to the obtained test task and the test task model.

With the method for character recognition according to embodiments of the disclosure, the test sample image and the test sample character corresponding to the test task are obtained. The fine-tuning is performed on the trained meta-learning model based on the test sample image and the test sample character to obtain the test task model. The test image corresponding to the test task is obtained, and the test character corresponding to the test image is generated by inputting the test image into the test task model. Therefore, the character recognition is implemented. In this way, with the meta-learning method in the disclosure, a degree of dependence of the test task model involved in the process of character recognition on a scale of training samples is reduced, an over-fitting phenomenon caused by the small number of training samples is avoided, the accuracy of the character recognition result is ensured, and reliability and efficiency of the process of the character recognition are improved.

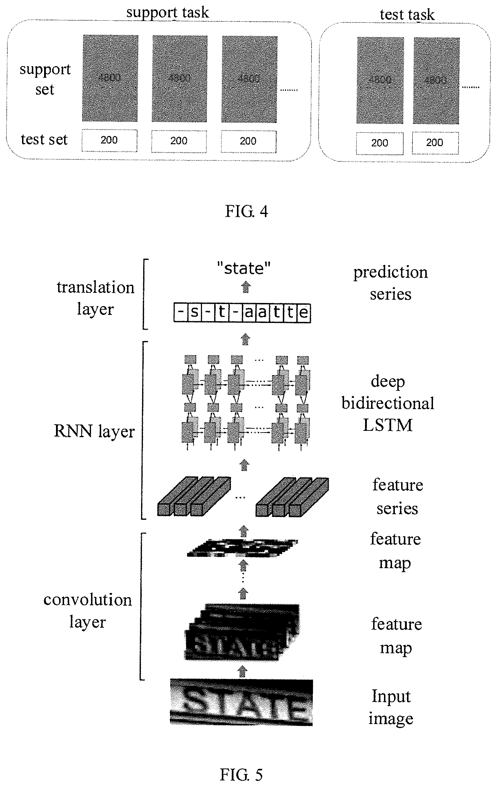

It should be noted that, in the disclosure, the data sets include the test set and a support set. For example, a possible way for constructing the data sets is illustrated in FIG. 4. The meta-training may be performed based on the support set to obtain a general meta-learning model. Further, meta-testing may be performed based on the test set, and the meta-learning model may be fine-tuned, which may improve the accuracy of the model recognition.

Description and explanation will be made below respectively for the meta-training and the meta-testing.

In embodiments of the disclosure, for a process of the meta-training, the meta-learning model may be a CRNN (convolutional recurrent neural network) model.

It should be noted that, presently, a framework of the CRNN model has been a model widely used in a recognition process of OCR. Thus, the disclosure employs the framework to perform testing, but may also try more other frameworks.

The CRNN model includes a convolution layer, a RNN (recurrent neural network) layer and a translation layer. The recognition process is illustrated in FIG. 5. The CRNN model performs convolution operation on an image by the convolution layer to obtain a feature map. After the feature map is inputted to the RNN layer, a GRU (gated recurrent unit) or LSTM (long short-term memory network) is generally employed to perform recognition on a series of the feature map, and then a CTC (connectionist temporary classification) loss function is employed to perform gradient back propagation.

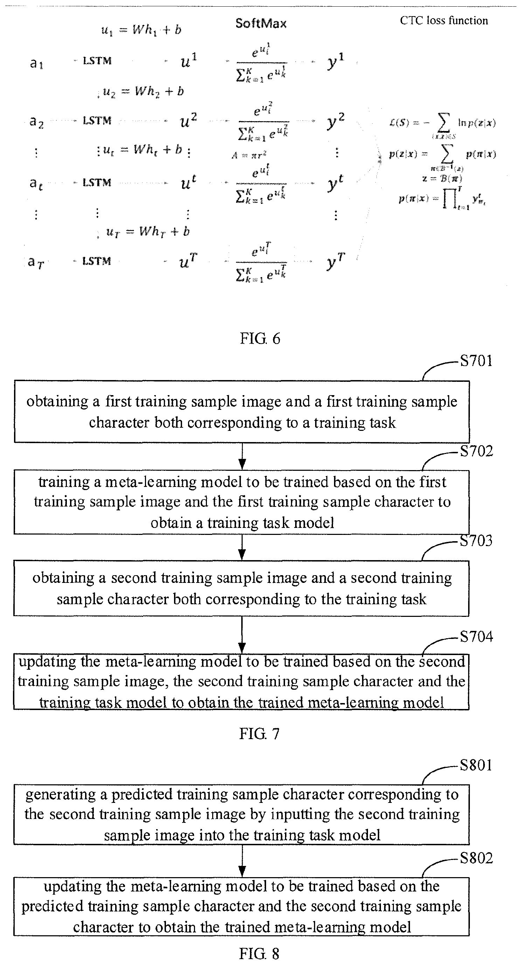

The CTC loss function is a key factor for training the model. A process of calculating the CTC loss function is illustrated in FIG. 6.

It should be noted that, in the disclosure, the meta-learning model is obtained by pre-training. In embodiments of the disclosure, as illustrated in FIG. 7, a method for establishing the meta-learning model in advance may include the following blocks.

At block S701, a first training sample image and a first training sample character both corresponding to a training task are obtained.

The first training sample image and the first training sample character may construct a support set in the data sets, and may be collected in advance for subsequent model training.

The number of the first training sample images and the number of the first training sample characters may be preset.

At block S702, a meta-learning model to be trained is trained based on the first training sample image and the first training sample character to obtain a training task model.

In embodiments of the disclosure, the meta-learning model to be trained may be trained several times based on the first training sample image and the first training sample character to obtain the training task model.

At block S703, a second training sample image and a second training sample character both corresponding to the training task are obtained.

The second training sample image and the second training sample character may construct a support set in the data sets, and may be collected in advance for subsequent model training.

The number of the second training sample images and the number of the second training sample characters may be preset.

At block S704, the meta-learning model to be trained is updated based on the second training sample image, the second training sample character and the training task model, to obtain the trained meta-learning model.

As a possible implementation, as illustrated in FIG. 8, on the basis of the above embodiments, the detailed process of the block S704 includes the following blocks.

At block S801, a predicted training sample character corresponding to the second training sample image is generated by inputting the second training sample image into the training task model.

In embodiments of the disclosure, the second training sample image is input into the training task model to generate the predicted training sample character corresponding to the second training sample image, that is, a prediction value.

At block S802, the meta-learning model is updated based on the predicted training sample character and the second training sample character to obtain the trained meta-learning model.

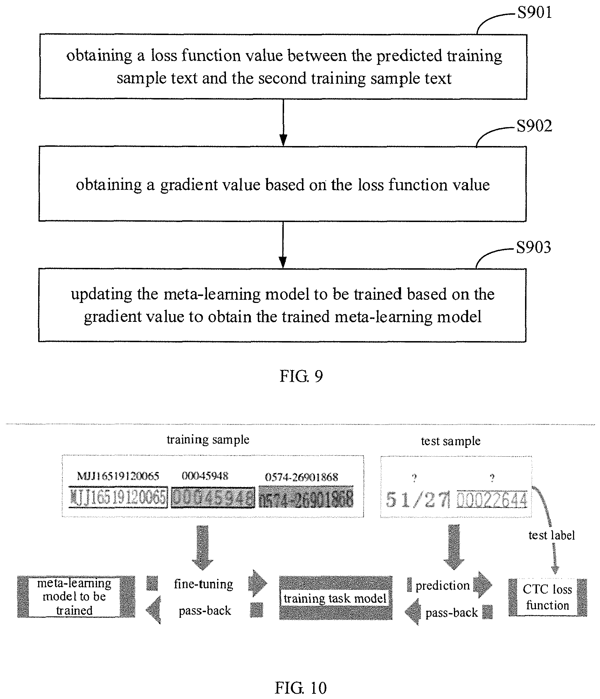

As a possible implementation, as illustrated in FIG. 9, on the basis of the above embodiments, the detailed process of the block S802 includes the following blocks.

At block S901, a loss function value between the predicted training sample character and the second training sample character is obtained.

The predicted training sample character is a true value.

The loss function value may be a CTC loss function value.

In embodiments of the disclosure, the loss function value between the predicted training sample character and the second training sample character may be calculated, that is, the CTC loss function value between the predicted value and the true value may be calculated.

At block S902, a gradient value is obtained based on the loss function value.

At block S903, the meta-learning model to be trained is updated based on the gradient value to obtain the trained meta-learning model.

In embodiments of the disclosure, after the gradient value is obtained, the stored gradient value may be transmitted back to the meta-learning model, to update the meta-learning model to be trained based on the gradient value. For example, the meta-learning model is updated by gradient descent to obtain the trained meta-learning model.

For example, as illustrated in FIG. 10, the above process of the meta-training mainly includes the following. For an initialized meta-learning model, i.e., the meta-learning model to be trained, training the support set is performed multiple times to obtain the training task model, i.e., a model based on the task. Further, the training task model may be predicted on the test set, the CTC loss function value between the predicted value and the true value may be calculated to obtain the gradient value, and the obtained gradient value may be stored and transmitted back to the meta-learning model, such that the meta-learning model to be trained may be updated by gradient descent.

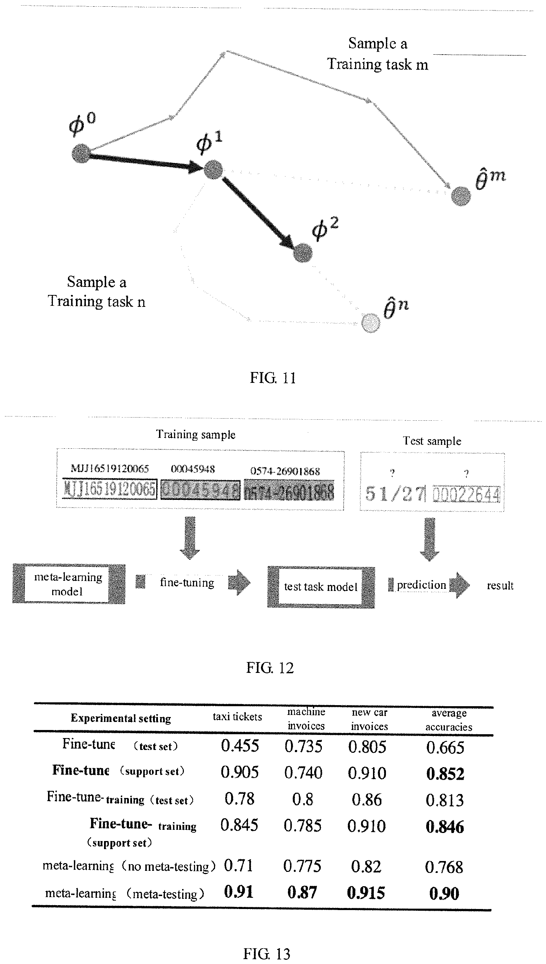

The process of updating is illustrated in FIG. 11.

Parameters of the meta-learning model are updated on the support set (each meta-testing task is marked as 4800). The process may be represented as:

$$\theta \leftarrow \phi_0 - \epsilon * \nabla_\phi \left( \phi, D_i^{tr} \right)$$

where $\phi$ denotes parameters of the meta-learning model, $\theta$ denotes parameters of the task model, $\phi_0$ denotes initial parameters of the meta-learning model, $\epsilon$ denotes an update weight of the parameters of the meta-learning model, $D_i^{tr}$ denotes a support set of the i-th task, $\nabla_\phi \left( \phi, D_i^{tr} \right)$ denotes a gradient of the support set of the i-th task on the parameters of the meta-learning model.

Forward processing is performed with the obtained updated model on the test set (each meta-testing task is marked as 200), the gradient values are calculated, all gradient values are accumulated, and the parameters of the model are updated by using SGD (stochastic gradient descent). This process may be represented as:

$$\phi \leftarrow \phi_0 - \epsilon * \nabla_\theta \left( \theta, D_i^{ts} \right)$$

where $\phi$ denotes parameters of the meta-learning model, $\theta$ denotes parameters of the task model, $\phi_0$ denotes initial parameters of the meta-learning model, $\epsilon$ denotes an update weight of the parameters of the meta-learning model, $D_i^{ts}$ denotes a test set of the i-th task, $\nabla_\theta \left( \theta, D_i^{ts} \right)$ denotes a gradient of the test set of the i-th task on the parameters of the task model.

Further, for the process of the meta-training, the process of the meta-testing is illustrated in FIG. 12.

In some embodiments, the test model based on the test task may be obtained by performing fine-tuning on the support set. Then the test model may be predicted on the test set to obtain a final result.

It should be noted that, in the disclosure, every time a new task class is added, the existing model does not requires to be retrained, and may be directly applied for recognition.

With the method for character recognition according to embodiments of the disclosure, the character recognition may be implemented by meta-learning including the meta-training and the meta-testing. In this way, the degree of the dependence of the test task model involved in the process of character recognition on the scale of training samples is reduced. The over-fitting caused by the small number of training samples is avoided. The accuracy of the character recognition result is ensured. The reliability and the efficiency of the process of the character recognition are improved. Meanwhile, the method provided in the disclosure is not related to a structure of the model, thus the method provided in the disclosure may train models with any structure, with a characteristic of high adaptability.

It should be noted that, in a practical application, tasks with different vertical-categories are tested based on the fine-tuning method and the meta-learning method provided in the disclosure respectively to obtain test results, and the test results are compared to obtain results illustrated in FIG. 13.

FIG. 13 is a schematic diagram illustrating a comparative effect of six groups of experiments.

In a first group of experiments, recognition accuracy rates for test sets of three test vertical-categories are obtained by using a pre-training model trained based on a data set with 10 million pieces of data. In a second group of experiments, the recognition accuracy rates for the test sets are obtained after the pre-training model trained based on the data set with 10 million pieces of data is fine-tuned on the support sets of three test vertical-categories. In a third group of experiments, a model is obtained after the pre-training model trained based on the data set with 10 million pieces of data is fine-tuned on a training vertical-category, and the recognition accuracy rates for the test sets of three test vertical-categories are obtained by employing the fine-tuned model. In a fourth group of experiments, a model is obtained after the pre-training model trained based on the data set with 10 million pieces of data is fine-tuned on the training vertical-category, and the recognition accuracy rates for the test sets are obtained after the fine-tuning is performed on the support sets of three test vertical-categories. In a fifth group of experiments, a model is obtained by the meta-learning on the training vertical-category, and the recognition accuracy rates for test sets of three test vertical-categories are obtained by employing the model. In a sixth group of experiments, a model is obtained by the meta-learning on the training vertical-category, and the recognition accuracy rates on the test sets are obtained by employing the model obtained on the support sets of three test vertical-categories. Three test vertical-categories may include a vertical-category of taxi ticket, a vertical-category of machine invoices and a vertical-category of new car invoices.

From the above comparison results, it may be seen that, finding a singularity on a meta-task is tried to quickly adapt to the result of meta- testing during MAML processing. It may obtain a better result on the test set with the small number of training samples. Finding an optimal solution is tried based on an existing task during fine-tuning processing. In the case of the small number of training samples, the accuracy is bound to be affected to some extent.

It should be noted that, the method for character recognition provided in the disclosure may be applied to various scenes.

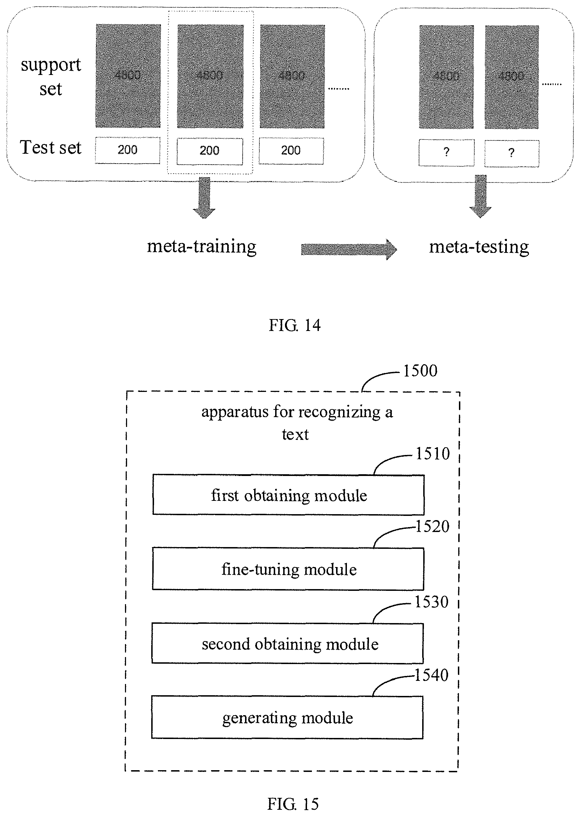

For an application scene of invoice recognition, as illustrated in FIG. 14, the meta-learning including the meta-training and the meta-testing may be performed based on computer vision and deep learning technologies, the support set and the test set, which may really improve OCR recognition ability under the small number of training samples.

It should be noted that, when a new task virtual-category such as taxi tickets, machine invoices, and new car invoices are tried to be added, the existing model does not require to be retrained, but recognition may be directly performed by using the existing model.

In this way, according to the method for character recognition provided in the disclosure, the degree of the dependence of the test task model involved in the character recognition process on the scale of training samples is reduced, such that the recognition ability of the CRNN model may be improved by 5% ~ 10%, and not limited by factors such as picture data and model structures. The method further provides a possibility for subsequent training of the recognition model and has the characteristics of high adaptability.

Corresponding to the method for character recognition provided in the above embodiments, some embodiments of the disclosure also provide an apparatus for character recognition Since the apparatus for character recognition provided in embodiments corresponds to the method for character recognition provided in the above embodiments, the implementation of the method for character recognition is also applicable for the apparatus for character recognition provided in embodiments, which will not be described in detail in embodiments.

FIG. 15 is a block diagram illustrating an apparatus for character recognition according to embodiments of the disclosure.

As illustrated in FIG. 15, the apparatus 1500 for character recognition includes: a first obtaining module 1510, a fine-tuning module 1520, a second obtaining module 1530, and a generating module 1540.

The first obtaining module 1510 is configured to obtain a test sample image and a sample character both corresponding to a test task. The fine-tuning module 1520 is configured to perform fine-tuning on a trained meta-learning model based on the test sample image and the test sample character to obtain a test task model. The second obtaining module 1530 is configured to obtain a test image corresponding to the test task. The generating module 1540 is configured to generate a test character corresponding to the test image by inputting the test image into the test task model.

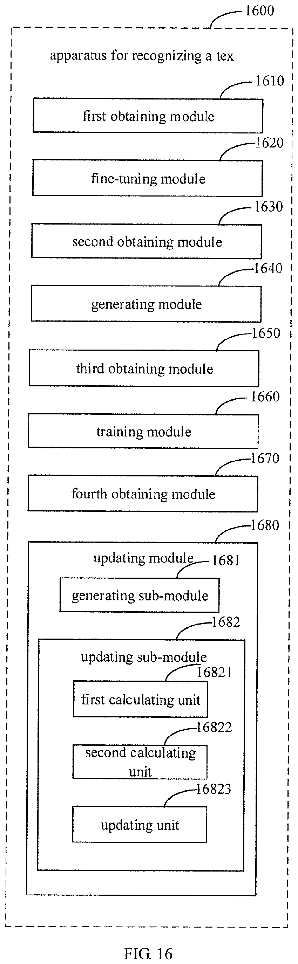

FIG. 16 is a block diagram illustrating an apparatus for character recognition according to another embodiment of the disclosure.

As illustrated in FIG. 16, the apparatus 1600 for character recognition includes: a first obtaining module 1610, a fine-tuning module 1620, a second obtaining module 1630, and a generating module 1640. The apparatus also includes: a third obtaining module 1650, a training module 1660, a training module 1660, and an updating module 1680.

The third obtaining module 1650 is configured to obtain a first training sample image and a first training sample character both corresponding to a training task. The training module 1660 is configured to train a meta-learning model to be trained based on the first training sample image and the first training sample character to obtain a training task model. The fourth obtaining module 1670 is configured to obtain a second training sample image and a second training sample character both corresponding to the training task. The updating module 1680 is configured to update the meta-learning model to be trained based on the second training sample image, the second training sample character and the training task model to obtain the trained meta-learning model.

The updating module 1680 includes: a generating sub-module 1681, and an updating sub-module 1682. The generating sub-module 1681 is configured to generate a predicted training sample character corresponding to the second training sample image by inputting the second training sample image into the training task model. The updating sub-module 1682 is configured to update the meta-learning model to be trained based on the predicted training sample character and the second training sample character to obtain the trained meta-learning model.

The updating sub-module 1682 includes: a first calculating unit 16821, a second calculating unit 16822, and a second calculating unit 16822. The first calculating unit 16821 is configured to obtain a loss function value between the predicted training sample character and the second training sample character. The second calculating unit 16822 is configured to obtain a gradient value based on the loss function value. The updating unit 16823 is configured to update the meta-learning model to be trained based on the gradient value to obtain the trained meta-learning model.

According to some embodiments of the disclosure, the loss function value is a connectionist temporal classification loss function value.

According to some embodiments of the disclosure, the trained meta-learning model is a convolution recursive neural network model.

It should be noted that, the first obtaining module 1610, the fine-tuning module 1620, the second obtaining module 1630, and the generating module 1640 have the same functions and structures as the first obtaining module 1510, the fine-tuning module 1520, the second obtaining module 1530, and the generating module 1540.

With the method for character recognition according to embodiments of the disclosure, the test sample image and the test sample character corresponding to the test task are obtained. The fine-tuning is performed on the trained meta-learning model based on the test sample image and the test sample character to obtain the test task model. The test image corresponding to the test task is obtained, and the test character corresponding to the test image is generated by inputting the test image into the test task model. Therefore, the character recognition is implemented. In this way, with the meta-learning method in the disclosure, a degree of dependence of the test task model involved in the process of character recognition on a scale of training samples is reduced, an over-fitting phenomenon caused by the small number of training samples is avoided, the accuracy of the character recognition result is ensured, and reliability and efficiency of the process of the character recognition are improved.

According to embodiments of the disclosure, the disclosure also provides an electronic device and a readable storage medium.

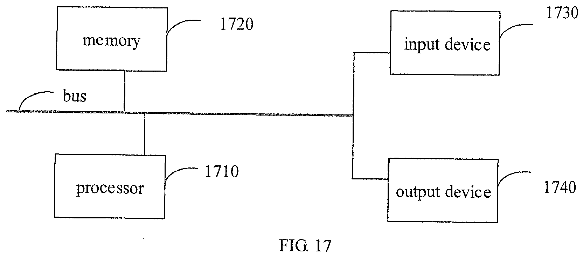

As illustrated in FIG. 17, FIG. 17 is a block diagram illustrating an electronic device capable of implementing a method for character recognition according to embodiments of the disclosure. The electronic device aims to represent various forms of digital computers, such as a laptop computer, a desktop computer, a workstation, a personal digital assistant, a server, a blade server, a mainframe computer and other suitable computers. The electronic device may also represent various forms of mobile devices, such as personal digital processing, a cellular phone, a smart phone, a wearable device and other similar computing device. The components, connections and relationships of the components, and functions of the components illustrated herein are merely examples, and are not intended to limit the implementation of the disclosure described and/or claimed herein.

As illustrated in FIG. 17, the electronic device includes: one or more processors 1710, a memory 1720, and interfaces for connecting various components, including a high-speed interface and a low-speed interface. Various components are connected to each other via different buses, and may be mounted on a common main board or in other ways as required. The processor may process instructions executed within the electronic device, including instructions stored in or on the memory to display graphical information of the GUI (graphical user interface) on an external input/output device (such as a display device coupled to an interface). In other implementations, multiple processors and/or multiple buses may be used together with multiple memories if desired. Similarly, multiple electronic devices may be connected, and each device provides some necessary operations (for example, as a server array, a group of blade servers, or a multiprocessor system). In FIG. 17, a processor 1710 is taken as an example.

The memory 1720 is a non-transitory computer readable storage medium provided by the disclosure. The memory is configured to store instructions executable by at least one processor, to enable the at least one processor to execute the method for character recognition provided by the disclosure. The non-transitory computer readable storage medium provided by the disclosure is configured to store computer instructions. The computer instructions are configured to enable a computer to execute the method for character recognition provided by the disclosure.

As the non-transitory computer readable storage medium, the memory 1720 may be configured to store non-transitory software programs, non-transitory computer executable programs and modules, such as program instructions/module (such as the first obtaining module 1510, the fine-tuning module 1520, the second obtaining module 1530, and the generating module 1540 illustrated in FIG. 15) corresponding to the method for character recognition according to embodiments of the disclosure. The processor 1710 is configured to execute various functional applications and data processing of the server by operating non-transitory software programs, instructions and modules stored in the memory 1720, that is, implements the method for character recognition according to the above method embodiments.

The memory 1720 may include a storage program region and a storage data region. The storage program region may store an application required by an operating system and at least one function. The storage data region may store data created according to prediction usage of the electronic device. In addition, the memory 1720 may include a high-speed random accessing memory, and may also include a non-transitory memory, such as at least one disk memory device, a flash memory device, or other non-transitory solid-state memory device. In some embodiments, the memory 1720 may optionally include memories remotely located to the processor 1710, and these remote memories may be connected to the electronic device via a network. Examples of the above network include, but are not limited to, an Internet, an intranet, a local area network, a mobile communication network and combinations thereof.

The electronic device may also include: an input device 1730 and an output device 1740. The processor 1710, the memory 1720, the input device 1730, and the output device 1740 may be connected via a bus or in other means. In FIG. 17, the bus is taken as an example.

The input device 1730 may receive inputted digital or character information, and generate key signal input related to user setting and function control of the electronic device, such as a touch screen, a keypad, a mouse, a track pad, a touch pad, an indicator stick, one or more mouse buttons, a trackball, a joystick and other input device. The output device 1740 may include a display device, an auxiliary lighting device (e.g., LED), a haptic feedback device (e.g., a vibration motor), and the like. The display device may include, but be not limited to, a liquid crystal display (LCD), a light emitting diode (LED) display, and a plasma display. In some embodiments, the display device may be the touch screen.

The various implementations of the system and technologies described herein may be implemented in a digital electronic circuit system, an integrated circuit system, an application specific ASIC (application specific integrated circuit), a computer hardware, a firmware, a software, and/or combinations thereof. These various implementations may include: being implemented in one or more computer programs. The one or more computer programs may be executed and/or interpreted on a programmable system including at least one programmable processor. The programmable processor may be a special purpose or general purpose programmable processor, may receive data and instructions from a storage system, at least one input device, and at least one output device, and may transmit data and the instructions to the storage system, the at least one input device, and the at least one output device.

These computing programs (also called programs, software, software applications, or codes) include machine instructions of programmable processors, and may be implemented by utilizing high-level procedures and/or object-oriented programming languages, and/or assembly/machine languages. As used herein, the terms "machine readable medium" and "computer readable medium" refer to any computer program product, device, and/or apparatus (such as, a magnetic disk, an optical disk, a memory, a programmable logic device (PLD)) for providing machine instructions and/or data to a programmable processor, including a machine readable medium that receives machine instructions as a machine readable signal. The term "machine readable signal" refers to any signal for providing the machine instructions and/or data to the programmable processor.

To provide interaction with a user, the system and technologies described herein may be implemented on a computer. The computer has a display device (such as, a CRT (cathode ray tube) or a LCD (liquid crystal display) monitor) for displaying information to the user, a keyboard and a pointing device (such as, a mouse or a trackball), through which the user may provide the input to the computer. Other types of devices may also be configured to provide interaction with the user. For example, the feedback provided to the user may be any form of sensory feedback (such as, visual feedback, auditory feedback, or tactile feedback), and the input from the user may be received in any form (including acoustic input, voice input or tactile input).

The system and technologies described herein may be implemented in a computing system including a background component (such as, a data server), a computing system including a middleware component (such as, an application server), or a computing system including a front-end component (such as, a user computer having a graphical user interface or a web browser through which the user may interact with embodiments of the system and technologies described herein), or a computing system including any combination of such background component, the middleware components and the front-end component. Components of the system may be connected to each other via digital data communication in any form or medium (such as, a communication network). Examples of the communication network include a local area network (LAN), a wide area networks (WAN), and the Internet.

With the method for character recognition according to embodiments of the disclosure, the test sample image corresponding to the test task and the test sample character included in the test sample image are obtained. The fine-tuning is performed on the trained meta-learning model based on the test sample image and the test sample character to obtain the test task model. The test image corresponding to the test task is obtained, and the test character corresponding to the test image is generated by inputting the test image into the test task model, thereby implementing character recognition. In this way, with the meta-learning method in the disclosure, the dependence of the test task model involved in the character recognition process on the scale of training samples is reduced, the over-fitting phenomenon caused by the small number of training samples is avoided, the accuracy of the character recognition result is ensured, and the reliability and efficiency in the character recognition process are improved.

According to the conversation-based recommending method of embodiments of the disclosure, the directed graph corresponding to the current conversation may be obtained. The current conversation includes the clicked items. The directed graph includes the nodes and the directed edges between the nodes. Each node corresponds to the clicked item. Each directed edge indicates the relationship data between the nodes. For each node of the directed graph, the attention weight for each directed edge corresponding to the node is determined based on the feature vector of the node and the relationship data. For each node of the directed graph, the new feature vector of the node is determined based on the relationship data and the attention weight of each directed edge. The feature vector of the current conversation is determined based on the new feature vector of each node. The item is recommended based on the feature vector of the current conversation. In this way, the weight of the directed edge in the directed graph may be adaptively determined by obtaining the directed graph corresponding to the current conversation and combining the feature vector and the relationship data of the node in the directed graph, and then the node may be represented based on the determined weight, which may efficiently learn the useful information and improve the accuracy of the conversation recommendation result.

It should be understood that, steps may be reordered, added or deleted by utilizing flows in the various forms illustrated above. For example, the steps described in the disclosure may be executed in parallel, sequentially or in different orders, so long as desired results of the technical solution disclosed in the disclosure may be achieved, there is no limitation here.

The above detailed implementations do not limit the protection scope of the disclosure. It should be understood by the skilled in the art that various modifications, combinations, sub-combinations and substitutions may be made based on design requirements and other factors. Any modification, equivalent substitution and improvement made within the principle of the disclosure shall be included in the protection scope of disclosure.

**Claims**

1. A method for character recognition, comprising:

   obtaining (S201) a test sample image and a test sample character both corresponding to a test task;
   performing (S202) fine-tuning on a trained meta-learning model based on the test sample image and the test sample character to obtain a test task model;
   obtaining (S203) a test image corresponding to the test task; and
   generating (S204) a test character corresponding to the test image by inputting the test image into the test task model.

2. The method of claim 1, further comprising:

   obtaining (S701) a first training sample image and a first training sample character both corresponding to a training task;
   training (S702) a meta-learning model to be trained based on the first training sample image and the first training sample character to obtain a training task model;
   obtaining (S703) a second training sample image and a second training sample character both corresponding to the training task; and
   updating (S704) the meta-learning model to be trained based on the second training sample image, the second training sample character and the training task model to obtain the trained meta-learning model.

3. The method of claim 2, wherein updating (S704) the meta-learning model to be trained based on the second training sample image, the second training sample character and the training task model to obtain the trained meta-learning model comprises:

   generating (S801) a predicted training sample character corresponding to the second training sample image by inputting the second training sample image into the training task model; and
   updating (S802) the meta-learning model to be trained based on the predicted training sample character and the second training sample character to obtain the trained meta-learning model.

4. The method of claim 3, wherein updating (S802) the meta-learning model to be trained based on the predicted training sample character and the second training sample character to obtain the trained meta-learning model comprises:

   obtaining (S901) a loss function value between the predicted training sample character and the second training sample character;
   obtaining (S902) a gradient value based on the loss function value; and
   updating (S903) the meta-learning model to be trained based on the gradient value to obtain the trained meta-learning model.

5. The method of claim 4, wherein the loss function value is a connectionist temporal classification loss function value.

6. The method of any of claims 1 to 5, wherein the trained meta-learning model is a convolution recursive neural network model.

7. An apparatus (1500) for character recognition, comprising:

a first obtaining module (1510), configured to obtain a test sample image and a sample character both corresponding to a test task;
a fine-tuning module (1520), configured to perform fine-tuning on a trained meta-learning model based on the test sample image and the test sample character to obtain a test task model;
a second obtaining module (1530), configured to obtain a test image corresponding to the test task; and
a generating module (1540), configured to generate a test character corresponding to the test image by inputting the test image into the test task model.

8. The method of claim 7, further comprising:

a third obtaining module (1650), configured to obtain a first training sample image and a first training sample character both corresponding to a training task;
a training module (1660), configured to train a meta-learning model to be trained based on the first training sample image and the first training sample character to obtain a training task model;
a fourth obtaining module (1670), configured to obtain a second training sample image and a second training sample character both corresponding to the training task; and
an updating module (1680), configured to update the meta-learning model to be trained based on the second training sample image, the second training sample character and the training task model to obtain the trained meta-learning model.

9. The apparatus of claim 8, wherein the updating module (1680) comprises:

a generating sub-module (1681), configured to generate a predicted training sample character corresponding to the second training sample image by inputting the second training sample image into the training task model; and
an updating sub-module (1682), configured to update the meta-learning model to be trained based on the predicted training sample character and the second training sample character to obtain the trained meta-learning model.

10. The apparatus of claim 9, wherein the updating sub-module (1682) comprises:

a first calculating unit (16821), configured to obtain a loss function value between the predicted training sample character and the second training sample character;
a second calculating unit (16822), configured to obtain a gradient value based on the loss function value; and
an updating unit (16823), configured to update the meta-learning model to be trained based on the gradient value to obtain the trained meta-learning model.

11. The apparatus of claim 10, wherein the loss function value is a connectionist temporal classification loss function value.

12. The apparatus of any of claims 7 to 11, wherein the trained meta-learning model is a convolution recursive neural network model.

13. An electronic device, comprising:

at least one processor (1710); and
a memory (1720), communicatively coupled to the at least one processor (1710);
wherein the memory (1720) is configured to store instructions executable by the at least one processor (1710), and when the instructions are executed by the at least one processor (1710), the at least one processor (1710) is caused to execute the method for character recognition according to any one of claims 1 to 6.

14. A non-transitory computer readable storage medium having computer instructions stored thereon, wherein the computer instructions are configured to cause a computer to execute the method for character recognition according to any one of claims 1 to 6.

15. A computer program product, comprising a computer program, wherein the computer program is configured to implement the method for character recognition according to any one of claims 1 to 6 when executed by a processor.

$\hat{\theta}^m$

$\phi^1$

$\phi^0$

$\phi^2$

$\hat{\theta}^n$

FIG. 1

S201

obtaining a test sample image and a test sample character both corresponding to a test task

S202

performing fine-tuning on a trained meta-learning model based on the test sample image and the test sample character to obtain a test task model

S203

obtaining a test image corresponding to the test task

S204

generating a test character corresponding to the test image by inputting the test image into the test task model

FIG. 2

1 — new car invoices   66161750458   bus tickets 150001810048

6

2 — quota invoices   00021519   taxi tickets 11300183401

7

3 — train ticket   ¥ 64.5 yuan   tolls

8

4 — machine invoices   Itineraries 2018-10-2

9

5 — roll tickets   value-added tax

10

FIG. 3

support task       test task

support
set

4800    4800    4800    ........      4800    4800    ........

test set    200    200    200       200    200

FIG. 4

translation
layer

"state"     prediction
series

| - | s | - | t | - | a | a | t | t | e |

RNN layer

deep
bidirectional
LSTM

feature
series

convolution
layer

feature
map

feature
map

Input
image

FIG. 5

$$u_1 = Wh_1 + b \qquad \text{SoftMax} \qquad \text{CTC loss function}$$

$$a_1 \quad \text{LSTM} \quad u^1 \quad \frac{e^{u_i^1}}{\sum_{k=1}^{K} e^{u_k^1}} \quad y^1$$

$$u_2 = Wh_2 + b$$

$$a_2 \quad \text{LSTM} \quad u^2 \quad \frac{e^{u_i^2}}{\sum_{k=1}^{K} e^{u_k^2}} \quad y^2 \qquad \mathcal{L}(S) = -\sum_{(x,z)\in S} \ln p(z|x)$$

$$\vdots \qquad u_t = Wh_t + b \qquad A = \pi r^2 \qquad \vdots \qquad p(z|x) = \sum_{\pi \in \mathcal{B}^{-1}(z)} p(\pi|x)$$

$$a_t \quad \text{LSTM} \quad u^t \quad \frac{e^{u_i^t}}{\sum_{k=1}^{K} e^{u_k^t}} \quad y^t \qquad z = \mathcal{B}(\pi)$$

$$\vdots \qquad \vdots \qquad \vdots \qquad \vdots \qquad p(\pi|x) = \prod_{t=1}^{T} y_{\pi_t}^t$$

$$u_T = Wh_T + b$$

$$a_T \quad \text{LSTM} \quad u^T \quad \frac{e^{u_i^T}}{\sum_{k=1}^{K} e^{u_k^T}} \quad y^T$$

FIG. 6

S701

obtaining a first training sample image and a first training sample character both corresponding to a training task

S702

training a meta-learning model to be trained based on the first training sample image and the first training sample character to obtain a training task model

S703

obtaining a second training sample image and a second training sample character both corresponding to the training task

S704

updating the meta-learning model to be trained based on the second training sample image, the second training sample character and the training task model to obtain the trained meta-learning model

FIG. 7

S801

generating a predicted training sample character corresponding to the second training sample image by inputting the second training sample image into the training task model

S802

updating the meta-learning model to be trained based on the predicted training sample character and the second training sample character to obtain the trained meta-learning model

FIG. 8

S901

obtaining a loss function value between the predicted training
sample text and the second training sample text

S902

obtaining a gradient value based on the loss function value

S903

updating the meta-learning model to be trained based on the
gradient value to obtain the trained meta-learning model

FIG. 9

training sample                          test sample

MJJ16519120065    00045948    0574-26901868          ?          ?
MJJ16519120065    00045948    0574-26901868      5 1 / 2 7   00022644

                                                              test label

meta-learning      fine-tuning                    prediction        CTC loss
model to be                      training task model              function
trained            pass-back                       pass-back

FIG. 10

FIG. 11

FIG. 12

| Experimental setting | taxi tickets | machine invoices | new car invoices | average accuracies |
|---|---|---|---|---|
| Fine-tune (test set) | 0.455 | 0.735 | 0.805 | 0.665 |
| **Fine-tune** (support set) | 0.905 | 0.740 | 0.910 | **0.852** |
| Fine-tune-training (test set) | 0.78 | 0.8 | 0.86 | 0.813 |
| **Fine-tune-** training (support set) | 0.845 | 0.785 | 0.910 | **0.846** |
| meta-learning (no meta-testing) | 0.71 | 0.775 | 0.82 | 0.768 |
| meta-learning (meta-testing) | **0.91** | **0.87** | **0.915** | **0.90** |

FIG. 13

support
set

Test set | 200 | 200 | 200 | | ? | ? |

meta-training ⟹ meta-testing

FIG. 14

1500

apparatus for recognizing a
text

1510

first obtaining module

1520

fine-tuning module

1530

second obtaining module

1540

generating module

FIG. 15

1600

apparatus for recognizing a tex

1610

first obtaining module

1620

fine-tuning module

1630

second obtaining module

1640

generating module

1650

third obtaining module

1660

training module

1670

fourth obtaining module

1680

updating module 1681

generating sub-module

1682

updating sub-module

16821

first calculating unit

16822

second calculating unit

16823

updating unit

FIG. 16

18

memory — 1720

input device — 1730

bus

processor — 1710

output device — 1740

FIG. 17

# EUROPEAN SEARCH REPORT

Europäisches Patentamt
European Patent Office
Office européen des brevets

**Application Number**

EP 21 21 3455

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GONG LIYUN ET AL: "A novel unified deep neural networks methodology for use by date recognition in retail food package image", SIGNAL, IMAGE AND VIDEO PROCESSING, vol. 15, no. 3, 1 September 2000 (2000-09-01), pages 449-457, XP037402321, ISSN: 1863-1703, DOI: 10.1007/S11760-020-01764-7 * figure 1 * * Section 2 * * Section 3.3 * | 1-15 | INV. G06V30/19 G06V10/82 G06V30/12 |

TECHNICAL FIELDS SEARCHED (IPC)

G06V

The present search report has been drawn up for all claims

| Place of search | Date of completion of the search | Examiner |
|---|---|---|
| The Hague | 6 May 2022 | Borges, Pedro |

EPO FORM 1503 03.82 (P04C01)